# EUROPÄISCHE PATENTSCHRIFT

(11) **EP 0 559 635 B1**
(45) Veröffentlichungstag und Bekanntmachung des Hinweises auf die Patenterteilung: **19.04.1995**
(21) Anmeldenummer: 93890036.2
(22) Anmeldetag: 04.03.1993
(51) Int. Cl.: B61F 3/12, B61F 5/16, B61D 3/10, B61D 13/00

(54) **Schienenfahrzeug**
Railway vehicle
Véhicule ferroviaire

(30) Priorität: 04.03.1992 AT 408/92
(43) Veröffentlichungstag der Anmeldung: 08.09.1993
(73) Patentinhaber: SGP Verkehrstechnik Gesellschaft m.b.H., 1110 Wien (AT)
(72) Erfinder: Lenk, Leopold, A-1100 Wien (AT)
(74) Vertreter: Köhler-Pavlik, Johann, Dipl.-Ing.

(56) Entgegenhaltungen:
- EP-A- 0 134 201
- EP-A- 0 343 482
- EP-A- 0 443 309

## Beschreibung

Die Erfindung betrifft ein Schienenfahrzeug nach dem Oberbegriff des Patentanspruches 1.

Durch die EP-A1-291 681 ist ein Schienenfahrzeug, insbesondere Stadtbahnwagen, bekannt geworden, bei welchem die benachbarten Enden zweier aufeinanderfolgender Wagen durch ein sphärisches Gelenk untereinander verbunden sind, welches oberhalb des Lautwerkes angeordnet ist, das einen tiefliegenden Lautwerkrahmen und einen Gelenkträger aufweist. Die bekannte Konstruktion des Schienenfahrzeuges hat den Nachteil, daß das Portalfahrwerk einen verhältnismäßig komplizierten und arbeitsaufwendigen Aufbau besitzt, wobei der Fußboden im Bereich des Portaldurchganges für Niederflurwagen zu hoch ist.

Mehrteilige sphärische Gelenke mit mehreren Gleitflächen sind jedoch bei Schienenfahrzeugen aus den US-PSen 2 216 547, 2 056 227 und 2 042 765 ebenfalls bekannt.

Aufgabe der vorliegenden Erfindung ist die Schaffung von Maßnahmen, durch welche eine Abknickung des Fußbodenteiles im Bereich des sphärischen Gelenkes verhindert und die Stabilität des sphärischen Gelenkes erhöht wird.

Diese Aufgabe wird erfindungsgemäß durch die Maßnahme nach dem kennzeichnenden Teil des Patentanspruches 1 gelöst.

Weitere Vorteile der Erfindung ergeben sich aus den Merkmalen der Unteransprüche.

Weitere Einzelheiten der Erfindung werden anhand der Zeichnung näher erläutert, in welcher ein Ausführungsbeispiel des Erfindungsgegenstandes dargestellt ist. Es zeigen
- Fig. 1: eine Zugsgarnitur in Seitenansicht,
- Fig. 2: den Zusammenbau des Portalfahrwerkes mit den beiden Endteilen der aufeinanderfolgenden Wagen und
- Fig. 3: den Bodenteil im Bereich der sphärischen Gelenke in Längsschnitt.

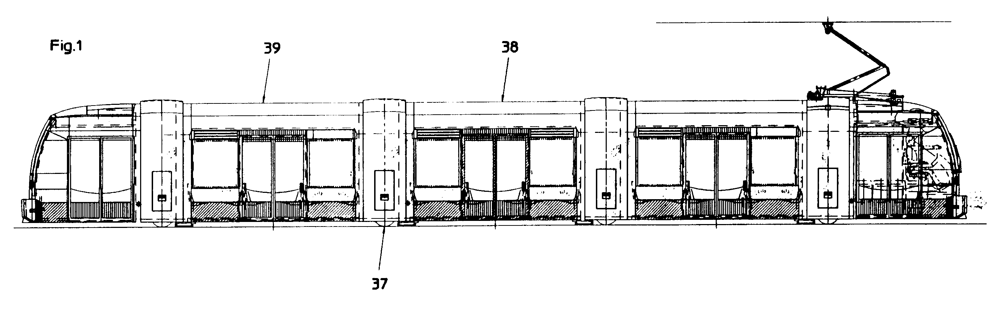

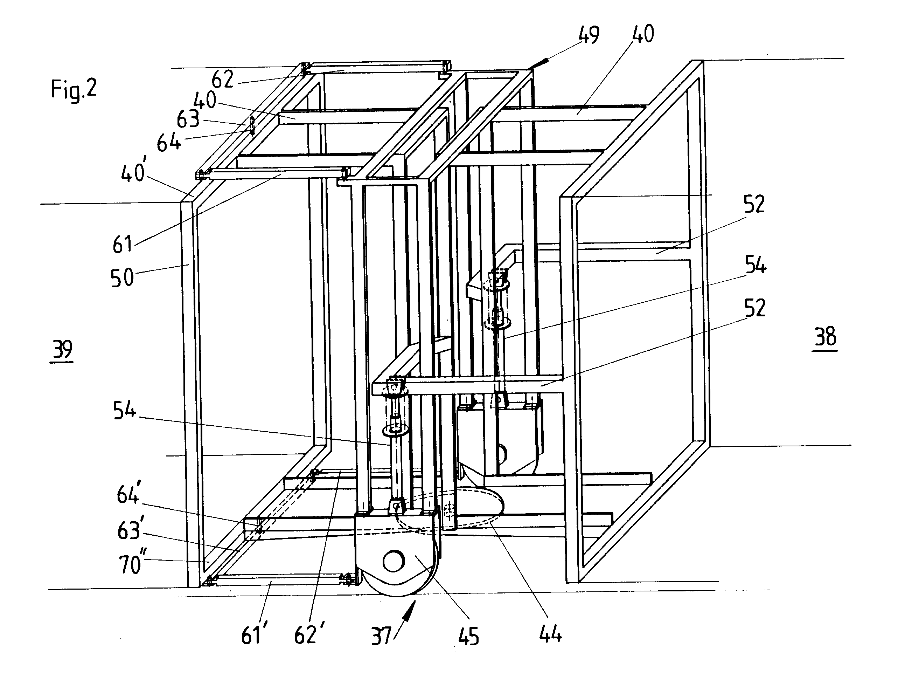

Wie der Fig. 1 entnommen werden kann, befindet sich das Portalfahrwerk 37 zwischen zwei aufeinanderfolgenden Wagen 38,39, von denen der eine z.B. der Wagen 39, auf dem Wagen 38 aufgesattelt ist. Zu diesem Zweck besitzen die einander zugekehrten Enden der beiden Wagen 38,39, wie der Fig. 2 zu entnehmen ist, zwei quer zur Fahrtrichtung, in Abstand voneinander angeordnete und sich in Fahrtrichtung erstreckende Rahmen 40., die bodenseitig durch eine zweiteilige Bodenplatte 44 verbunden sind. Die beiden durch die Rahmen 40 gebildeten Fortsätze der Wagen begrenzen den Durchgang zwischen den beiden Wagen 38 und 39.

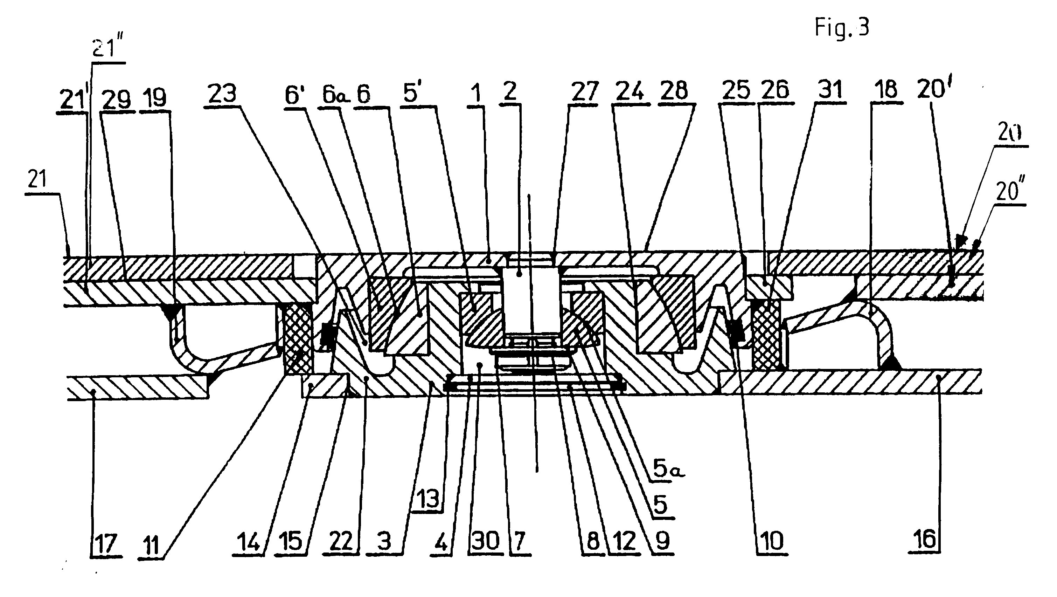

Mit 20 ist, wie Fig. 3 zeigt, der von einem der beiden aufeinanderfolgenden Wagen ausragende Bodenteil und mit 21 der vom benachbarten Ende des nachfolgenden Wagens ausragende Bodenteil bezeichnet. Beide Bodenteile 20,21 bestehen jeweils aus zwei Platten 20',20'' bzw. 21',21'', von welchen die Platten 20',21' über einen Bügel 18 bzw. 19 mit einer darunterliegenden Tragplatte 16 bzw. 17 verschweißt sind. Im vorliegenden Fall ist der Bodenteil 20 der tragende Teil, auf welchem der Bodenteil 21 unter Zwischenschaltung eines aus zwei Teilen eines sphärischen Gelenkes bzw. zweier sphärischer Gelenke aufgesattelt ist. Die Tragplatte 16 des tragenden Bodenteiles 20 ist zu diesem Zweck über den Bodenteil 20 hinaus verlängert und im ausragenden Teil 14 mit einer kreisrunden Öffnung 15 versehen, in welche ein mit U-förmig aufgebogenen Rampen 22 versehenes zylindrisches Gehäuse 3 eingeschweißt ist. Das Gehäuse 3 ist im Bereich der U-förmigen Mulde 23 mit einem Absatz 24 versehen, in welchem der eine als ringförmige konvexe Kugelkalotte 6 bzw. kugelkalottenförmige Gleitfläche ausgebildete Teil eines sphärischen Gelenkes 6a bzw. Gelenkteiles sitzt, dessen kongruenter konkaver Teil 6' in einem ringförmigen Gehäuse 1 sitzt, welches in eine kreisrunde Öffnung 25 eines Verlängerungsarmes 26 des Bodenteiles 21 eingeschweißt ist. Das Gehäuse 1 hat eine horizontale Bodenfläche 28, welche mit der Bodenfläche 29 des Bodenteiles 21 bündig abschließt und eine Öffnung 27 besitzt, in die ein Zapfen 2 eingeschweißt ist, auf dem eine, einen Teil eines zweiten sphärischen Gelenkes 5a bzw. Gelenkteiles bildende ringförmige Kugelkalotte 5 bzw. kugelkalottenförmige Gleitfläche sitzt, auf welche sich ein korrespondierender Teil 5' des sphärischen Gelenkes 5a bzw. Gelenkteiles abstützt, welcher im Gehäuse 3 angeordnet ist. Die beiden sphärischen Gelenke 5a, 6a bzw. Gelenkteile sitzen konzentrisch ineinander. Hiebei sind die beiden, die sphärischen Gelenke 5a,6a bzw. Gelenkteile tragenden Gehäuse 1,3 ineinandergesetzt und koaxial.

Die Kugelkalotte 5 bzw. kugelkalottenförmige Gleitfläche sitzt auf einem Zwischenring 9, der von einem Sicherungsring 8 und einer Mutter 7 gehalten ist, welche auf einen Gewindeteil des Zapfens 2 aufgeschraubt ist. Der das sphärische Gelenk 5a bzw. den sphärischen Gelenkteil aufnehmende Raum 30 des Gehäuses 3 ist durch eine Abdeckplatte 4 verschlossen, welche von einem Sägering 12 gehalten ist. Mit 10 und 11 sind Dichtungen bezeichnet, wobei die Dichtung 11 aus einem von der Tragplatte 16 des Bodenteiles 20 nach oben abstehenden Halbring 31 aufweist, mit welchen ein vom Bodenteil 21 nach unten ragender Halbring 11 an den Enden verbunden ist.

Die Konstruktion ist so gestaltet, daß der Bodenteil 20 mit seinem Gehäuse 3 gegenüber dem Bodenteil 21 mit seinem Gehäuse 1, dank der beiden sphärischen Gelenke 5a und 6a bzw. Gelenkteile um einen Winkel Alpha, welcher maximal etwa 5° beträgt, wie strichliert angedeutet ist, verschränkt werden kann.

Das Portalfahrwerk 37 besitzt zwei Losräder 45, aufwelchen sich ein Portal 49 abstützt. Das Portal 49 ist, wie Fig. 2 zeigt, über die aus den Rahmen 40 bestehenden Fortsätze der beiden benachbarten Enden der aufeinanderfolgenden Wagen gestülpt. Die Decke des Portales 49 ist zu beiden Seiten an das eine Ende je eines in Fahrtrichtung gelegenen Lenkers 61 bzw. 62 angelenkt, von welchen das andere Ende an einen quer zur Fahrtrichtung gelegenen Balken 63 angelenkt ist, der mittig bei 64 am Wagenkasten 39, im vorliegenden Fall an einen oberen Querträger 70' des Rahmens 50, angelenkt ist. Gleiche Lenker 61',62' sind auch bodenseitig vorgesehen und einerends am Radkasten der Losräder 45 und andernends an einen quer zur Fahrtrichtung gelegenen Balken 63' angelenkt, welcher in gleicher Weise wie der Balken 63 an einem unteren Träger 70'' bei 64' angelenkt ist.

Die endseitigen den Durchgang zwischen benachbarten Wagen begrenzenden Träger 40 des tragenden Wagens, im vorliegenden Fall des Wagens 38, sind jeweils mit einem im wesentlichen horizontalen quer zur Fahrtrichtung seitlich abstehenden Winkelrahmen 52 versehen, welcher sich etwa in der Mitte des Wagenkastens befindet und den jeweiligen Träger 40 mit dem Wagenkasten bzw. dessen Rahmen 50 verbindet. Jeder der beiden Rahmen 52 stützt sich über ein Federbein 54, wie Fig. 2 zeigt, am Rad 45 ab.

Selbstverständlich können im Rahmen der beanspruchten Erfindung verschiedene konstruktive Änderungen vorgenommen werden. So wäre beispielsweise die Anwendung von mehr als zwei ineinander sitzender konzentrischer sphärischer Gelenke denkbar.

## Patentansprüche

1. Schienenfahrzeug mit zumindest zwei mittels eines sphärischen Gelenkes (6a,6b) verbundenen, eine Wagengarnitur bildende Wagen (38,39), wobei die benachbarten Enden aufeinanderfolgender Wagen mit einem Rahmen (40) versehen sind und an der Verbindungsstelle ein als Portalfahrwerk (37) ausgebildetes Fahrwerk mit Losrädern (45) vorgesehen ist, bei welchem die quer zur Fahrtrichtung einander gegenüberliegenden Räder bzw. Radgestelle ein Portal (49) oder Portalgerüst tragen, welches zumindest einen Teil des Durchganges zwischen den aufeinanderfolgenden Wagen bildet, aus den beiden benachbarten Enden zweier aufeinanderfolgender Wagen je ein den Durchgang bildender Bodenteil (20,21) hinausragt, von welchen beiden Bodenteilen der eine auf den anderen unter Zwischenschaltung des sphärischen Gelenkes (6a,6b) aufgesattelt ist und gemeinsam den Fußboden des Durchganges bilden, wobei das Portal, Portalgerüst od.dgl. des Fahrwerkes deckenseitig und bzw. oder bodenseitig durch mindestens einen in Fahrtrichtung angeordneten Lenker (61,61',62,62') mit dem einen Ende des einen der beiden aufeinanderfolgenden Wagen (38,39), vorzugsweise dem aufgesattelten Wagen (39), gelenkig verbunden ist, wobei das sphärische Gelenk aus mehreren Teilen mit zusammenwirkenden Gleitflächen besteht, dadurch gekennzeichnet, daß jeder der beiden Bodenteile (20,21) je ein Gehäuse (3 bzw. 1) aufweist, welches mit je einer konvexen und einer konkaven Gleitfläche (5,5',6,6') versehen ist, welche mit einer konkaven bzw. konvexen Gleitfläche des anderen Gehäuses zusammenwirkt.

2. Schienenfahrzeug nach Anspruch 1, dadurch gekennzeichnet, daß die beiden Gehäuse (1,3) scheibenförmig ausgebildet sind und jedes der beiden scheibenförmigen Gehäuse (1,3) mit einem die innere kreisförmige Mulde begrenzenden ringförmigen Rand versehen ist, wobei der ringförmige Rand des einen scheibenförmigen Gehäuses (3) in die innere kreisförmige Mulde des anderen scheibenförmigen Gehäuses (1) greift.

3. Schienenfahrzeug nach Anspruch 1, dadurch gekennzeichnet, daß das Gehäuse (3) des tragenden Bodenteiles (20) außenseitig einen konvexen Ringkugelkalottenteil (6) und innenseitig einen konkaven Ringrugelkalottenteil (5') aufweist.

4. Schienerfahrzeug nach Anspruch 3, dadurch gekennzeichnet, daß das Gehäuse (1) des aufgesattelten Bodenteiles (21) einen konkaven, mit dem konvexen ringförmigen Kugelkalottenteil (6) des Gehäuses (3) des tragenden Bodenteiles (20) zusammenwirkenden ringförmigen Kugelteil (6') abstützt und ein sphärisches Gelenk (6a) bildet, welches einen Zapfen (2) trägt, auf welchem ein konvexer ringförmiger Kugelkalottenteil (5) sitzt, der einen korrespondierenden Kugelkalottenteil (5') des Gehäuses (3) des Bodenteiles (20) abstützt und ein zweites sphärisches Gelenk (5a) bildet.

5. Schienenfahrzeug nach Anspruch 4, dadurch gekennzeichnet, daß die beiden sphärischen Gelenke (5a und 6a) um einen Winkel (Alpha) von 5° gegeneinander verstellbar sind.

6. Schienenfahrzeug nach mindestens einem der vorangegangenen Ansprüche, dadurch gekennzeichnet, daß das innere sphärische Gelenk (5a) in einen Raum (30) des Gehäuses (3) des Bodenteiles (20) untergebracht ist, welcher von einer Platte (4) abgedeckt ist.

7. Schienenfahrzeug nach Anspruch 2, dadurch gekennzeichnet, daß die beiden Gehäuse (1,3) gegeneinander durch eine Dichtung (10) abgedichtet sind.

8. Schienenfahrzeug nach Anspruch 1, dadurch gekennzeichnet, daß die Tragplatte (16) des Bodenteiles (20) einen nach oben abstehenden Dichtring (31) aufweist, in welchen ein vom Bodenteil (21) nach unten ragender Dichtring (11) eingreift.

## Claims

1. A rail vehicle having at least two carriages (38, 39) connected by means of a spherical joint (6a, 6b) and forming a set of carriages, wherein the adjacent ends of consecutive carriages are provided with a frame (40), and, at the connection point, a bogie formed as a portal bogie (37) is provided with loose wheels (45), wherein the wheels or wheel frames, opposing each other transversely to the direction of travel, carry a portal (49) or portal frame which forms at least part of the passage between the consecutive carriages, and a base part (20, 21) forming the passage projects from each of the two adjacent ends of two consecutive carriages, one of the two base parts being mounted on the other by means of the spherical joint (6a, 6b) and together forming the floor of the passage, wherein the portal, portal frame or the like of the bogie is connected at the top and/or at the bottom in an articulated manner to one end of one of the two consecutive carriages (38, 39), preferably to the mounted carriage (39), by at least one connecting rod (61, 61', 62, 62') arranged in the direction of travel, wherein the spherical joint comprises a plurality of parts having co-operating sliding surfaces, characterised in that each of the two base parts (20, 21) has a housing (3 and 1 respectively) which is provided with a convex and a concave sliding surface (5, 5', 6, 6') which co-operates, respectively, with a concave and convex sliding surface of the other housing.

2. A rail vehicle according to claim 1, characterised in that the two housings (1, 3) are disc-shaped and each of the two disc-shaped housings (1, 3) is provided with an annular edge bounding the inner circular trough, the annular edge of one disc-shaped housing (3) engaging in the inner circular trough of the other disc-shaped housing (1).

3. A rail vehicle according to claim 1, characterised in that the housing (3) of the supporting base part (20) has a convex annular spherical part (6) on the outside and a concave annular spherical part (5') on the inside.

4. A rail vehicle according to claim 3, characterised in that the housing (1) of the mounted base part (21) supports a concave annular spherical part (6') co-operating with the convex annular spherical part (6) of the housing (3) of the supporting base part (20) and forms a spherical joint (6a) carrying a pivot (2) on which is mounted a convex annular spherical part (5) which supports a corresponding spherical part (5') of the housing (3) of the base part (20) and forms a second spherical joint (5a).

5. A rail vehicle according to claim 4, characterised in that the two spherical joints (5a and 6a) are displaceable in relation to each other by an angle (alpha) of 5°.

6. A rail vehicle according to at least one of the preceding claims, characterised in that the inner spherical joint (5a) is accommodated in a space (30) in the housing (3) of the base part (20), the said space (30) being covered by a plate (4).

7. A rail vehicle according to claim 2, characterised in that the two housings (1, 3) are sealed in relation to each other by a seal (10).

8. A rail vehicle according to claim 1, characterised in that the supporting plate (16) of the base part (20) has an upward projecting sealing ring (31) in which a sealing ring (11), projecting downwards from the base part (21), engages.

## Revendications

1. Véhicule ferroviaire avec au moins deux voitures (38, 39) formant une composition, reliées au moyen d'une articulation sphérique (6a, 6b), dans lequel les extrémités voisines de voitures successives sont pourvues d'un cadre (40) et au point de liaison il est prévu un bogie avec roues folles (45), conçu à la manière d'un bogie à portique (37), dans lequel les roues ou chaises de roue se faisant face transversalement au sens de la marche, portent un portique (49) ou structure en portique, qui forme au moins une partie du passage entre les voitures successives, un élément de fond (20, 21) formant le passage, ressortant des deux extrémités voisines de deux voitures successives, l'un des deux éléments de fond est accouplé sur l'autre par insertion de l'articulation sphérique (6a, 6b) et forment ensemble le plancher du passage, dans lequel le portique, la structure en portique ou similaire du bogie est relié articulé côté plafond et/ou côté plancher par au moins un bras oscillant (61, 61', 62, 62'), placé dans le sens de la marche, avec une extrémité de l'une des deux voitures (38, 39) successives, de préférence la voiture (39) attelée dessus, dans lequel l'articulation sphérique est constituée de plusieurs parties avec des surfaces de glissement coopérantes, caractérisé en ce que chacun des éléments de fond (20, 21) comporte un boîtier (3 ou 1) qui est pourvu de surfaces de glissement convexes et concaves (5, 5', 6, 6'), qui coopère avec respectivement une surface de glissement concave et une surface de glissement convexe de l'autre boîtier.

2. Véhicule ferroviaire selon la revendication 1, caractérisé en ce que les deux boîtiers (1, 3) sont en forme de disque et chacun des deux boîtiers (1, 3) en forme de disque est pourvu d'un bord annulaire délimitant la cavité circulaire intérieure, le bord annulaire d'un boîtier (3) en forme de disque s'engageant dans la cavité circulaire intérieure de l'autre boîtier (1) en forme de disque.

3. Véhicule ferroviaire selon la revendication 1, caractérisé en ce que le boîtier (3) de l'élément de fond (20) porteur présente extérieurement un élément en calotte sphérique annulaire (6) convexe et intérieurement un élément en calotte sphérique annulaire (5') concave.

4. Véhicule ferroviaire selon la revendication 3, caractérisé en ce que le boîtier (1) de l'élément de fond (21) attelé sur l'autre, soutient un élément sphérique (6') annulaire concave coopérant avec l'élément à calotte sphérique (6) annulaire convexe du boîtier (3) de l'élément de fond (20) porteur et forme une articulation (6a) sphérique qui porte un tourillon (2) sur lequel est calé un élément à calotte sphérique (5) annulaire convexe, qui soutient un élément à calotte sphérique (5') correspondant du boîtier (3) de l'élément de fond (20) et forme une seconde articulation (5a) sphérique.

5. Véhicule ferroviaire selon la revendication 4, caractérisé en ce que les deux articulations sphériques (5a et 6a) sont réglables l'une par rapport à l'autre d'un angle (alpha) de 5°.

6. Véhicule ferroviaire selon l'une au moins des revendications précédentes, caractérisé en ce que l'articulation (5a) sphérique intérieure est logée dans un compartiment (30) du boîtier (3) de l'élément de fond (20), qui est recouvert par une plaque (4).

7. Véhicule ferroviaire selon la revendication 2, caractérisé en ce que les deux boîtiers (1, 3) sont rendus étanches l'un par rapport à l'autre par une garniture d'étanchéité (10).

8. Véhicule ferroviaire selon la revendication 1, caractérisé en ce que la plaque de support (16) de l'élément de fond (20) présente une bague d'étanchéité (31) dépassant vers le haut, dans laquelle s'engage une bague d'étanchéité (11) dépassent de l'élément de fond (21) vers le bas.
